(19) Europäisches Patentamt
European Patent Office
Office européen des brevets

(11) EP 0 763 725 A2

(12) **EUROPÄISCHE PATENTANMELDUNG**

(43) Veröffentlichungstag:
19.03.1997 Patentblatt 1997/12

(51) Int. Cl.⁶: **G01M 15/00**

(21) Anmeldenummer: 96114448.2

(22) Anmeldetag: 10.09.1996

(84) Benannte Vertragsstaaten:
FR GB IT

(30) Priorität: 14.09.1995 DE 19534057
23.12.1995 DE 19548604

(71) Anmelder: **MTU Motoren- und Turbinen-Union**
**Friedrichshafen GmbH**
**88045 Friedrichshafen (DE)**

(72) Erfinder: **Zimmermann, Uwe, Dr.-Ing.**
**54341 Fell (DE)**

(74) Vertreter: **Winter, Josef**
**MTU Motoren- und Turbinen-Union**
**Friedrichshafen GmbH**
**Patentabteilung ZJXP**
**D-88040 Friedrichshafen (DE)**

(54) **Verfahren zur Bestimmung der Unterschiede ungleichförmiger Zylindermomente bei einer Brennkraftmaschine und Anwendung des Verfahrens**

(57) Die Erfindung betrifft ein Verfahren zur zylinderindividuellen Bestimmung relativer Unterschiede ungleichförmiger Zylindermomente bei einer Kolbenbrennkraftmaschine, insbesondere eines vielzylindrigen Verbrennungsmotors mit Einzelzylinderabschaltung. Das Verfahren sieht vor, die Unterschiede ausgehend von der Drehbewegung der Kurbelwelle der durch innere und äußere Widerstandsmomente sowie durch das Trägheitsmoment aller zu beschleunigenden Massen belasteten Kolbenbrennkraftmaschine indirekt dadurch zu ermitteln, daß das Drehzahlsignal zunächst durch Anwendung des Superpositionsprinzips linearer Systeme in Drehzahlkomponenten der Einzelzylinder aufgeteilt wird. Dazu werden das Drehzahlsignal der komplett betriebenen Kolbenbrennkraftmaschine und das entsprechende Drehzahlsignal der mit (n-1) Zylindern betriebenen Kolbenbrennkraftmaschine voneinander subtrahiert werden. Diese, dem Zünddruck zuzuordnenden Drehzahlunterschiede, werden dann für jeden Zylinder mit dem Drehzahlunterschied eines Bezugszylinders verglichen. Das Ergebnis dieses Vergleichs entspricht dem relativen Momentenunterschied beider Zylinder und kann zahlenmäßig durch statistische Berechnungsverfahren, wie z. B. dem Least-Square-Verfahren, bestimmt werden. Folglich werden aus den Drehzahlverläufen auch die Unterschiede der relativen Einspritzmengen in die Zylinder erkennbar, so daß dieses Verfahren zum Abgleich von Einspritzmengen in die Zylinder eingesetzt werden kann.

Fig. 2

**Beschreibung**

Die Erfindung betrifft ein Verfahren zur Bestimmung ungleichförmiger Zylindermomente anhand von Motordrehzahlen mit den im Oberbegriff des Patentanspruchs 1 gegebenen Merkmalen.

Im Rahmen der Motorzustandsüberwachung ist es wichtig, den Beitrag eines jeden Zylinders zum gesamten Motormoment zu kennen. Ungleichförmige Zylindermomente können durch Abweichungen in der Befüllung der einzelnen Zylinder bis hin zu Zündaussetzern entstehen. Weder die Momente der einzelnen Zylinder noch das Motormoment können jedoch unmittelbar gemessen werden. Stattdessen werden Größen gemessen, die indirekt auf das Moment schließen lassen. Zur Bestimmung des Motormoments sind daher Verfahren (EP 0 474 652 B1) bekannt, die Drehzahlsignale der Kurbelwelle auswerten, da diese unmittelbar aus dem Moment folgen und einfach zu messen sind. Diese Verfahren basieren jedoch auf großen Zündabständen, wie sie z. B. bei 4 oder 6-Zylindermotoren vorliegen. Bei vielzylindrigen Motoren mit wesentlich kürzeren Zündabständen können diese bekannten Verfahren jedoch nicht eingesetzt werden.

Der Erfindung liegt daher das Problem zugrunde, ein Verfahren aufzuzeigen, das es ermöglicht, Unterschiede der Momentenbeiträge der einzelnen Zylinder von beliebig vielzylindrigen Motoren anhand des Kurbelwellendrehzahlverlaufs zu bestimmen. Dieses Problem wird durch die im Patentanspruch 1 aufgeführten Merkmale gelöst.

Erfindungswesentlich an dem beanspruchten Verfahren ist, daß Unterschiede der Momente einzelner Zylinder anhand einer Analyse des Drehzahlsignals auf der Kraftseite (KS) oder der Kraftgegenseite (KGS) der Kurbelwelle des Motors aus deren Zünddruck relativ zu einem Bezugszylinder bestimmt werden. Grundsätzlich baut die Erfindung dabei auf den an sich bekannten Tatsachen auf, daß die durch die zyklische Arbeitsweise von Kolbenmaschinen bewirkte Drehbewegung der Kurbelwelle unter der Wirkung von Gas-und Massenkräften ungleichförmig verläuft, diese Prozesse sich periodisch mit dem Arbeitszyklus wiederholen und daß die ungleichförmige Drehbewegung proportional zu der dabei verrichteten Arbeit ist.

Die Motordrehzahl ist ein einfach zu messendes Signal, das in jedem Drehzahlregler ohnehin vorliegt. Daher ist es vorteilhaft, auf dieser Basis die Momente der einzelnen Zylinder zu bestimmen. Andererseits ist das Drehmoment eines Dieselmotors eine Synthese einzelner Momente, die aus den Gasdrücken in den Zylindern und Massenkräften der Kolben und Pleuel sowie unbekannten Störmomenten resultieren. Die Störmomente setzen sich aus Reibung, Momenten des Rädertriebs und Lastmomenten zusammen.

Damit anhand von Drehzahlsignalverläufen unterschiedliche Momentenbeiträge der einzelnen Zylinder bestimmt werden können, ist die Vorgehensweise weitgehend unempfindlich gegenüber Störeinflüssen. Störeinflüsse auf die Drehzahl, wie z. B. der Einfluß der Massenkräfte, der Reibung, der Kompression und des Ladungswechsels, werden erfindungsgemäß durch Anwendung des Superpositionsprinzips eliminiert. Zur Durchführung des erfindungsgemäßen Verfahren ist es nötig, daß während des Motorbetriebs einzelne Zylinder des Motors gezielt abgeschaltet werden können. Zylindereinzelabschaltung und die Anwendung des Superpositionsprinzips schaffen gemeinsam die Möglichkeit, den Momentenanteil jedes einzelnen Zylinders am Gesamtmotordrehmoment anhand des Drehzahlsignals isoliert darzustellen. Besonderen Vorteil bietet dabei die Überlagerung zweier unter gleichen Betriebsbedingungen über ein Arbeitsspiel des Motors meßtechnisch erfaßter Drehzahlverläufe, da sich, bei entsprechender Vorzeichenwahl, dadurch sämtliche periodisch mit dem Arbeitszyklus wiederkehrenden Drehbewegungsanteile gegenseitig aufheben. Übrig bleibt jeweils der unverfälschte Unterschied der einander überlagerten Signalverläufe. Vergleicht man also die Drehzahlwerte bzw. Drehzahlverläufe des komplett betriebenen Motors mit denjenigen des Motors bei dem ein Zylinder abgeschaltet ist, so erhält man den unmittelbar auf den abgeschalteten Zylinder zurückzuführenden Drehzahl- bzw. Drehmomentenanteil. Unter den zusätzlichen Voraussetzungen, daß der Einspritzbeginn bezogen auf die jeweilige Kurbelwinkelstellung und der Kompressionsdruckverlauf in allen Zylindern gleich ist, vereinfacht sich die Signalauswertung um zusätzliche Anpassungsschritte. Außerdem erhält man bei diesen Vorgaben unmittelbar ausschließlich das Zündmoment des jeweils betrachteten Zylinders.

Damit ermöglicht das erfindungemäße Verfahren eine einfache Einzeldarstellung der Momente der einzelnen Zylinder ohne eine aufwendige zeitliche Unterteilung des Meßbetriebs während eines Arbeitsspiels. Folglich bleibt die Dauer der Zündabstände bzw. die Anzahl der Zylinder ohne Einfluß auf die Güte des ermittelten Momentensignals.

Ein anderer bedeutender Vorteil ergibt sich aus dem Einsatz des erfindungsgemäßen Verfahrens bei Motoren mit elektronischer Brennstoffregelung, wo gezielt einzelne Zylinder abgeschaltet werden können, wie dies beispielsweise beim Common-Rail-Einspritzsystem möglich ist. Da von den relativen Unterschieden der Drehzahlverläufe unmittelbar auf die relativen Einspritzmengenunterschiede geschlossen und darausfolgend Aktionen eingeleitet werden können, ist es mit Hilfe des erfindungsgemäßen Verfahrens möglich, einen Abgleich von Kraftstoff-Einspritzmengen in die Zylinder durchzuführen. Einspritzmengenstreuungen, z. B. durch Toleranzen verursacht, können damit einfach und zuverlässig ausgeglichen werden, um in allen Zylindern gleiche Mitteldrücke zu realisieren. Dieser durch das erfindungsgemäße Verfahren möglich gewordene Abgleich erlaubt es erstmals, bei der Herstellung der Kolben-Zylinder-Baugruppe auf äußerst enge Fertigungstoleranzen zu verzichten, weil Maß- und daraus resultierende Leistungsunterschiede einzelner Zylinder zylinderindividuell durch entsprechende Einspritzmengenvariierung ausgeglichen werden können. Hieraus resultieren bedeutend geringere Fertigungskosten.

Nachfolgend wird die Vorgehensweise gemäß der Erfindung anhand der verwendeten formelmäßigen Beziehungen erläutert:

Für die Bestimmung des relativen Zünddruck-Moments einzelner Zylinder, wird das Drehzahlsignal zunächst durch Anwendung des Superpositionsprinzips linearer Systeme in einzelne Drehzahlkomponenten aufgeteilt. Diese Auswertung basiert auf dem Drehschwingungsmodell des Dieselmotors. Beispielsweise setzt sich die Motordrehzahl an der KS-Seite aus einzelnen Drehzahlen zusammen, die von den einzelnen Zylindermomenten herrühren.

$$n_{KS} = n_{KS}^{A1} + n_{KS}^{B1} + n_{KS}^{A2} + n_{KS}^{B2} + ... + n_{KS}^{An} + n_{KS}^{Bn} + n_{Stör} \qquad (3.1)$$

Spaltet man das Moment eines Zylinders in ein Massenmoment $M_m^{zyl}$, ein Moment durch den Zünddruckverlauf - das Zünddruck-Moment $M_Z^{zyl}$-, ein Moment durch Kompression und Ladungswechsel $M_K^{zyl}$ sowie ein Reibungsmoment $M_R^{zyl}$ auf,

$$M^{zyl} = M_m^{zyl} + M_Z^{zyl} + M_K^{zyl} + M_R^{zyl} \qquad (3.2)$$

so können die Drehzahlen aufgrund der einzelnen Zylindermoment-Komponenten in der Gleichung 3.1 nochmals aufgespalten werden in

$$n_{KS}^{zyl} = n_{KS_m}^{zyl} + n_{KS_Z}^{zyl} + n_{KS_K}^{zyl} + n_{KS_R}^{zyl} \qquad (3.3)$$

mit

$$Zyl = [A1, B1, A2, B2, ..., An, Bn] \qquad (3.4)$$

Dieses Überlagerungsprinzip kann nun eingesetzt werden, um den Einfluß der Massenkräfte, der Reibung, der Kompression und des Ladungswechsels auf die Drehzahl zu eliminieren. Dazu dient der Vergleich der KS-Drehzahlen in einem Arbeitspunkt "0". Diese Drehzahl ist für den gesamten Motor allgemein:

$$n_{KS}^{\;\;0} = n_{KS}^{A1^0} + n_{KS}^{B1^0} + ... + n_{KS}^{An^0} + n_{KS}^{Bn^0} + n_{Stör}^{\;\;0} \qquad (3.5)$$

Wird jeweils ein Zylinder abgeschaltet, während alle anderen Zylinder im Arbeitspunkt "0" betrieben werden, so ergeben sich Drehzahlverläufe, wie im folgenden am Beispiel der Abschaltung des Zylinders A1 beschrieben:

$$n_{KS}^{\;\;A1} = n_{KS}^{A1^{A1}} + n_{KS}^{B1^{A1}} + ... + n_{KS}^{An^{A1}} + n_{KS}^{Bn^{A1}} + n_{Stör}^{\;\;A1} \qquad (3.6)$$

mit

$$n_{KS}^{B1^{A1}} = n_{KS}^{B1^0} \quad n_{KS}^{A2^{A1}} = n_{KS}^{A2^0} \quad ... \quad n_{KS}^{Bn^{A1}} = n_{KS}^{Bn^0} \qquad (3.7)$$

Die Differenz der Drehzahlen der Gln.(3.5) und (3.6) führt zu

$$\Delta n_{KS}^{\;\;A1} = n_{KS}^{\;\;0} - n_{KS}^{\;\;A1} \qquad (3.8)$$

Einsetzen der Gl.(3.5) in die Gl.(3.8) liefert

$$\Delta n_{KS}{}^{A1} - n_{KS_m}^{A10} + n_{KS_Z}^{A10} + n_{KS_K}^{A10} + n_{KS_R}^{A10} - n_{KS_m}^{A1A1} - n_{KS_Z}^{A1A1} - n_{KS_K}^{A1A1} - n_{KS_R}^{A1A1} \qquad (3.9)$$

Unter der Annahme, daß die Momente durch Kompression und Ladungswechsel und Reibung mit und ohne Zündung von A1 gleich sind,

$$M_m^0 - M_m^{A1} \; , \; M_K^0 = M_K^{A1} \; , \; M_R^0 = M_R^{A1} \qquad (3.10)$$

vereinfacht sich die Gl.(3.9) zu

$$n_{KS_{ZA1}} - \Delta n_{KS}{}^{A1} - n_{KS_Z}^{A10} - n_{KS_Z}^{A1A1} \qquad (3.11)$$

Das Differenzdrehzahlsignal

$$n_{KS_{ZA1}}$$

ist damit nur noch eine Funktion des Moments aus dem Zünddruck $M_Z^{Zyl}$. Dieses Differenzdrehzahlsignal ist ein synthetisches Signal. Es könnte theoretisch dann gemessen werden, wenn allein der Zünddruck des Zylinders A1 auf die Kurbelwelle einwirken würde. Daher wird es im folgenden mit Zünddruck-Drehzahl bezeichnet.

Nach der gleichen Vorgehensweise werden für alle anderen Zylinder ebenfalls Differenzdrehzahlsignale bzw. Zünddruck-Drehzahlen bestimmt.

Nach der Aufspaltung der zylinderindividuellen Drehzahlen in die einzelnen Zünddruck-Drehzahlen, wird aus diesen Zünddruck-Drehzahlen der Unterschied dieser Verläufe für jeden Zylinder relativ zu einem Bezugszylinder bestimmt. Als Bezugszylinder kann jeder beliebige Zylinder gewählt werden, wobei allerdings alle restlichen Zylinder jeweils zu dem selben Zylinder in Bezug gesetzt werden müssen, um eine objektiv vergleichbare Aussage zu erhalten. In den nachfolgenden Erläuterungen wird der Zylinder A1 als Bezugszylinder gewählt.

Den Zusammenhang zwischen dem Zünddruck-Moment $M_Z^{Zyl}$ und der KS-Zünddruck-Drehzahl

$$n_{KS_{ZZyl}}$$

dieses Zylinders (Zyl) beschreibt der Frequenzgang der für

$$F_{KS_{Zyl}},$$

jeden der Zylinder existiert und ein zylinderindividuelles Übertragungsverhalten ausdrückt. Entsprechend wird mit dem Frequenzgang

$$F_{KGS_{Zyl}}$$

das Zünddruck-Moment zur KGS-Drehzahl

$$n_{KGS_{ZZyl}}$$

übertragen.

Die Frequenzgänge unterschiedlicher Zylinder zueinander sind nicht gleich, da sie auf unterschiedliche Kurbelwellenkröpfungen wirken. Daraus folgt, daß wem das Zünddruck-Moment des Zylinders $A1$ $M_Z^{A1}$ identisch zum Zünddruck-Moment des Zylinders $A2$ $M_Z^{A2}$ ist, sich die Zünddruck-Drehzahl

$$n_{KS_{ZA1}}$$

von der Zünddruck-Drehzahl

$$n_{KS_{ZA2}}$$

unterscheidet. Es gilt also

$$F_{KS_{An}} = F_{KS_{Bn}} \text{ aber } F_{KS_{An}} \neq F_{KS_{Am}} \quad F_{KS_{Bn}} \neq F_{KS_{Bm}} \text{ mit } n \neq m \qquad (3.15)$$

Für den Bezugszylinder A1 gilt im Frequenzbereich

$$n_{KS_{Z\,A1}}(j\omega) = F_{KS_{A1}} * M_z^{A1}(j\omega) \qquad (3.16)$$

und entsprechend für einen beliebigen Zylinder Zyl

$$n_{KS_{Z\,Zyl}}(j\omega) = F_{KS_{Zyl}} * M_z^{Zyl}(j\omega) \qquad (3.17)$$

Wird angenommen, daß der Zylinder Zyl das $K_{Zyl}$-fache des Moments des Zylinders A1 um den Zündwinkel $\varphi_{Zyl}$ verschoben liefert, dann führt dieses zu der Darstellung im Frequenzbereich

$$M_z^{Zyl}(j\omega) = K_{Zyl} * M_z^{A1}(j\omega) * e^{(-j*\varphi_{Zyl})} \qquad (3.18)$$

Einsetzen der Gln. (3.17) und (3.18) in die Gl.(3.16) und Umformen ergibt

$$n_{KS_{Z\,Zyl}}(j\omega) = K_{Zyl} * \frac{F_{KS_{Zyl}}}{F_{KS_{A1}}} * e^{(-j*\varphi_{Zyl})} * n_{KS_{Z\,A1}}(j\omega) \qquad (3.19)$$

oder

$$n_{KS_{Z\,A1}}(j\omega) * K_{Zyl} * e^{(-j\varphi_{Zyl})} = \frac{F_{KS_{A1}}}{F_{KS_{Zyl}}} * n_{KS_{Z\,Zyl}}(j\omega) \qquad (3.20)$$

mit

$$\frac{F_{KS_{A1}}}{F_{KS_{Zyl}}} * n_{KS_{Z\,Zyl}}(j\omega) = n^r_{KS_{Z\,Zyl}}(j\omega) \qquad (3.21)$$

Die rechte Seite der Gleichung (3.20) stellt eine Reduktion der Zünddruck-Drehzahl des betrachteten Zylinders auf den Bezugszylinder A1 dar. Die relative Zünddruck-Drehzahl

$$n^r_{KS_{ZZyl}}$$

ergibt sich nach der Rücktransformation.

Um nun den Unterschied der Zünddruck-Momente zwischen den einzelnen Zylindern gegenüber dem Bezugszylinder festzustellen, wird das reduzierte Zünddruck-Drehzahlsignal mittelwertfrei über den Kurbelwinkel relativ zum Zünd-OT des Zylinders beginnend mit "null" in einen Vektor $x_{Zyl}$ umgeschrieben. Entsprechend wird das Zünddruck-Drehzahlsignal des Bezugszylinders A1 mittelwertfrei relativ zum Zünd-OT des Zylinders A1 in einen Vektor $x_{A1}$ umgeschrieben. In dieser Darstellung ergibt sich der statische Übertragungsfaktor $K_{Zyl}$ aus der Gleichung

$$x_{ZYL} = K_{ZYL} * x_{A1}.$$

Das statische Übertragungsverhalten zwischen den Zünddruck-Drehzahlen, ist also durch den Übertragungsfaktor $K_{Zyl}$ ausgedrückt. Für eine biasfreie Schätzung wird der Schätzwert für die Übertragung der Zünddruck-Momente und der Schätzwert $K_{Zyl}$ Für das entsprechende Übertragungsverhalten des Drehzahlverlaufs gleich. Damit kann der Übertragungsfaktor $K_{Zyl}$ mittels statistischer Berechnungsmethoden, wie beispielsweise durch Minimierung des Quadrats des Fehlers e nach dem Least Square-Verfahren als Verhältnis der Kreuzkorrelationsfunktion und der Autokorrelationsfunktions der Zünddruck-Drehzahlen für $\tau = 0$ aus folgender Gleichung ermittelt werden.

$$K^*_{Zyl} = \frac{\phi_{x_{A1}x_{Zyl}}(0)}{\phi_{x_{A1}x_{A1}}(0)} = \frac{\sum_{i=0}^{N-1} x_{Zyl}(i) * x_{A1}(i)}{\sum_{i=0}^{N-1} x^2_{A1}(i)} \qquad (3.23)$$

Der auf diese Weise ermittelte Übertragungsfaktor $K_{Zyl}$ ist das Verhältnis aus dem Moment des Zylinders Zyl zum Moment des Bezugszylinders A1, und damit ein Maß für den relativen Unterschied des Zünddruck-Momentes des Zylinders relativ zu dem des Bezugszylinder.

Nach diesen Erläuterungen wird ein Ausführungsbeispiel der Erfindung anhand der Zeichnung beschrieben. Es zeigt:

Fig. 1    ein Kurbelwellen-Drehzahlverlauf bei dem alle Zylinder in Betrieb sind,
Fig. 2    den Verlauf der Zünddruck-Drehzahlen der Zylinder A1 und B1,

In dem dargestellten Ausführungsbeispiel wird für einen 16 Zylinder V-Dieselmotor (nicht dargestellt) der Unterschied der relativen Zylindermomente eines Zylinderpaares A1, B1 bestimmt. Dieser V-Dieselmotor ist mit einem elektronisch geregelten Akkumulator-Einspritzsystem ausgestattet. Damit können einzelne Zylinder $A_1$, $B_1$ ... $A_8$, $B_8$ gezielt abgeschaltet werden und sowohl die Einspritzmenge als auch der Einspritzbeginn in allen Zylindern präzise geregelt werden.

Anderst als bei der Ableitung der relativen Zünddruck-Momente eines beliebigen Zylinders relativ zu einem Bezugszylinder, vereinfacht sich die Herleitung der Zünddruck-Momenten-Unterschiede der Zylinder eines Zylinderpaares aufgrund der Motor-Bauform.

Bei dem 16-Zylinder-Dieselmotor der V-Bauart, bei dem die Zylinderpaare $A_1$ und $B_1$ ... $A_8$ und $B_8$ jeweils auf dieselbe Kurbelwellenkröpfung wirken, haben die Zylinder eines Paares Ai, Bi denselben Frequenzgang

$$F_{KS_{Zyl}}.$$

Wenn die Zünddruck-Momente und damit die Füllung für die Zylinder eines Paares gleich sind, müssen auch beide Zünddruck-Drehzahlen

$$n_{KS_{ZA1}} \quad \text{und} \quad n_{KS_{ZB1}}$$

verschoben um die Zündwinkeldifferenz zwischen beiden Zylindern $A_1$ und $B_1$ gleich sein.

Daraus kann der relative Unterschied der Zünddruck-Momente $M_Z^{Zyl}$ zwischen dem Zylinder $A_1$ und dem Zylinder $B_1$ zueinander abgeleitet werden.

Schreibt man die Zünddruck-Drehzahl

$$n_{KS_{ZA1}}$$

und die Zünddruck-Drehzahl

$$n_{KS_{ZB1}},$$

wie oben allgemein beschrieben, in einen Vektor $x_{A1}$ bzw. in einen Vektor $x_1$, dann sind beide Vektoren $x_{A1}$ und $x_{B1}$ über einen Arbeitszyklus aufgetragen deckungsgleich, wenn die Zünddruck-Momente beider Zylinder gleich sind. Unterscheiden sich die Zünddruck-Momente dieser beiden Zylinder $A_1$ und $B_1$ um den Faktor $K_1$, gilt für den Drehzahlverlauf

$$x_{A1} = K_1 {}^*x_{B1}.$$

Entsprechend kann mit der allgemeinen Gleichung

$$K_n^* = \frac{\phi_{x_{Bn}x_{An}}(0)}{\phi_{x_{Bn}x_{Bn}}(0)} = \frac{\sum_{i=0}^{N-1} x_{An}(i) * x_{Bn}(i)}{\sum_{i=0}^{N-1} x_{Bn}^2(i)} \qquad (3.14)$$

der Übertragungsfaktor $K_1$ berechnet werden. Hierbei ist N die Anzahl der Daten, für die die Schätzung durchgeführt werden soll und n der Index für den jeweils betrachteten Zylinder.

Zur Bestimmung der relativen Zylindermomente werden nach dem durch die Erfindung gegebenen Verfahren zunächst in einem ersten Versuch die KS-Drehzahlen $n_{KS}^0$ in einem Arbeitspunkt "0" aufgenommen und daraus der KS-Drehzahlverlauf bestimmt. Dazu und während der folgenden Verfahrensschritte wird der Dieselmotor auf einen Arbeitspunkt mit konstantem Lastmoment, derselben Zylinderfüllung und gleichem Einspritzbeginn ausgeregelt.

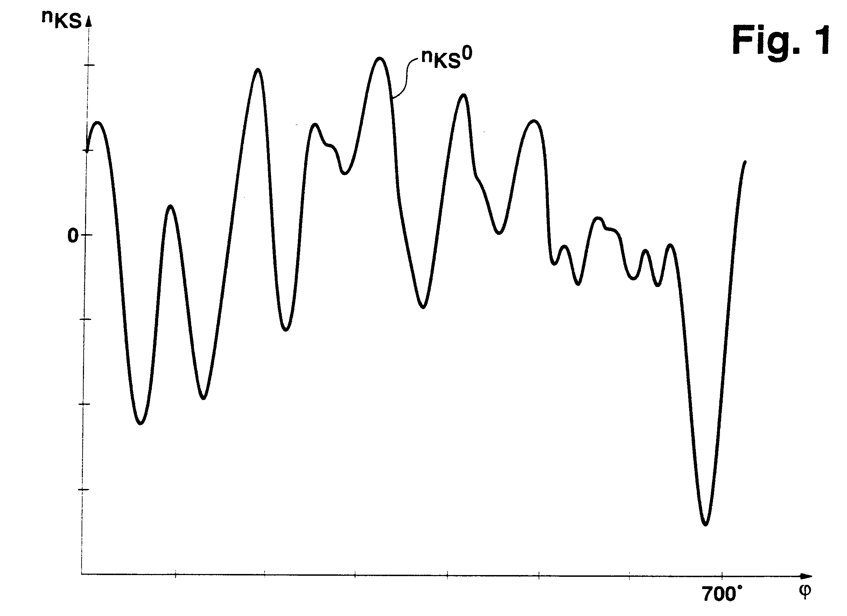

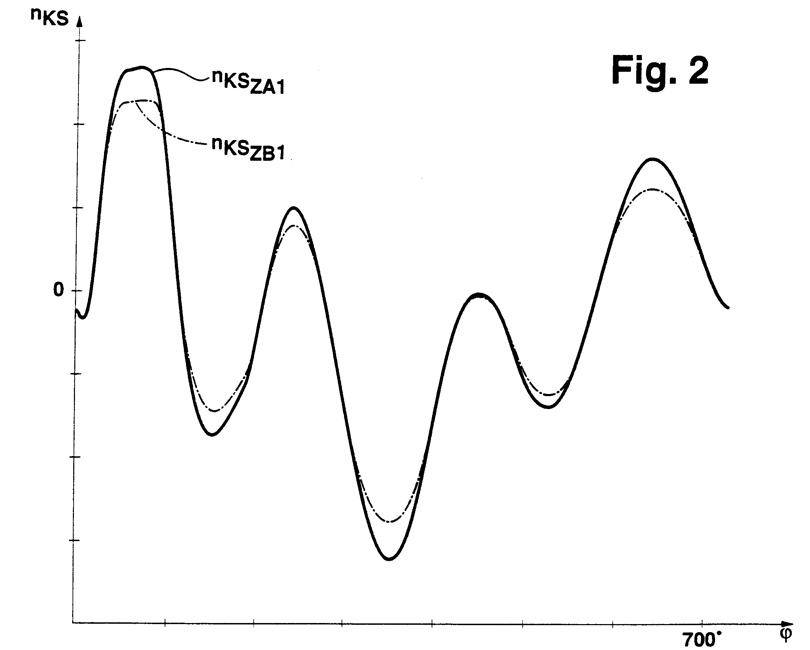

In Figur 1 ist der aufdiese Weise erhaltene KS-Drehzahlverlauf $n_{KS}^0$ mittelwertfrei Ober dem Kurbelwinkel $\varphi$ für ein Arbeitsspiel, also $\varphi = 720°C$ aufgetragen. Der Verlauf $n_{KS}^0$ entspricht einem Arbeitszyklus, bei dem alle 16 Zylinder des Dieselmotors betrieben sind. Figur 2 zeigt die Zünddruck-Drehzahlverläufe

$$n_{KS_{ZA1}}, n_{KS_{ZB1}}.$$

Die Signalverläufe wurden als Ergebnis des zweiten erfindungsgemäßen Verfahrenschritts erhalten. Dieser sieht eine Versuchsreihe vor, deren durchgeführte Messungen zwei Arbeitszyklen des Motors umfassen, wobei während des ersten Arbeitszyklus der Zylinder A1 und während des zweiten Arbeitszyklus der Zylinder B1 nicht mit Brennstoffversorgt werden, sprich ausgeschaltet sind, während alle übrigen Zylinder A2, B2 ... A8, B8 mit derselben Füllung wie im Arbeitspunkt "0" betrieben werden. Auch während dieses Meßbetriebs werden jeweils die Kurbelwellendrehzahlen $n_{KS}{}^{A1}$, $n_{KS}{}^{B1}$ aufgenommen und daraus die Drehzahlsignale bestimmt.

Über den betrachteten Fall hinaus, können in analoger Weise während weiterer 14 Arbeitszyklen die Drehzahlverläufe der übrigen Zylinder bestimmt werden, wobei nacheinander jeder einzelne Zylinder A2, B2 ... A8, B8, abgeschaltet wird.

Im Verfahrensschritt 3, werden die ermittelten Drehzahlverläufe $n_{KS}{}^{A1}$ und $n_{KS}{}^{B1}$ einzeln dem Drelzahlsignal $n_{KS}{}^{0}$ des Dieselmotors ohne Zylinderabschaltung überlagert, um dabei jeweils die Differenz beider Verläufe nach den Gleichungen

$$\Delta n_{KS}{}^{A1} = n_{KS}{}^{0} - n_{KS}{}^{A1} = n_{KS_{ZA1}} \; ; \; \Delta n_{KS}{}^{B1} = n_{KS}{}^{0} - n_{KS}{}^{B1} = n_{KS_{ZB1}} \qquad (3.8)$$

zu berechnen. Als Ergebnis erhält man die Zünddruck-Drehzahlsignale

$$n_{KS_{ZA1}}, n_{KS_{ZB1}},$$

die aufgrund gleicher Parameterwahl nur dem jeweils abgeschalteten Zylinder A1 bzw. B1 zuzuordnen sind. In diesem beschriebenen Ausführungsbeispiel sind diese Verläufe nur noch eine Funktion des Moments aus dem Zünddruck $M_Z{}^{Zyl}$ des Zylinders A1 bzw. des Zylinders B1. Mit diesen Zünddruck-Drehzahlsignalen

$$n_{KS_{ZA1}}, n_{KS_{ZB1}}$$

liegt der isolierte Zünddruck-Momentenanteil des Zylinders A1 bzw. des Zylinders B1 unverfälscht vor. Für die Zylinder A1, B1 sind diese isolierten Zünddruck-Drehzahlen

$$n_{KS_{ZA1}}, n_{KS_{ZB1}}$$

als Verlauf 3 in Figur 2 dargestellt.

Nachdem nun die Zünddruck-Drehzahlen

$$n_{KS_{ZA1}}, n_{KS_{ZB1}}$$

bzw. die zylinderindividuellen Zündmomentenanteile der Zylinder A1 und B1 vorliegen, werden im Verfahrensschritt 4 die beiden Zylindermomente, bzw. die auf diese zurückzuführenden Zünddruck-Drehzahlen

$$n_{KS_{ZA1}} \text{ und } n_{KS_{ZB1}}$$

zueinander in Beziehung gesetzt. Dazu wird der Zylinder B1 als Bezugszylinder ausgewählt und unter Anwendung der Formel 3.14 der statische Übertragungsfaktor $K_1$ berechnet. $K_1$ stellt ein Maß für den relativen Unterschied des Zünddruck-Momentes des Zylinders A1 zu demjenigen des Zylinders B1 dar.

Ausgehend von dem zahlenmäßig im Übertragungsfaktor $K_1$ vorliegenden relativen Drehzahl- bzw. Zündmomentenunterschied der Zylinder A1 und B1, kann unmittelbar auf die Unterschiede der Einspritzmengen zueinander ins Verhältnis gesetzter Zylinder geschlossen werden. So liefert das Verhältnis der Zünddruck-Momente durch eine weitere Auswertung den Füllungsunterschied des Zylinders $A_1$ zum gewählten Bezugszylinders $B_1$.

Allgemein kann somit der Übertragungsfaktor Kn als Eingangsgröße der Einspritzregelung zugeleitet und dazu verwendet werden, die Ungleichförmigkeiten der Momentenbeiträge der einzelnen Zylinder durch geeignete Einspritzmengenanpassung zylinderindividuell auszugleichen.

**Patentansprüche**

1. Verfahren zur zylinderindividuellen Bestimmung relativer Unterschiede ungleichförmiger Zylindermomente bei einer Kolbenbrennkraftmaschine, insbesondere eines vielzylindrigen Verbrennungsmotors mit Einzelzylinderabschaltung, durch indirektes Ermitteln des Drehzahlsignals ausgehend von der Drehbewegung der Kurbelwelle der durch innere und äußere Widerstandsmomente sowie durch das Trägheitsmoment aller zu beschleunigenden Massen belasteten Kolbenbrennkraftmaschine, dadurch gekennzeichnet, daß die relativen Momentenunterschiede einzelner Zylinder mittels Analyse der Drehzahl der Kolbenbrennkraftmaschine jeweils aus dem Verhältnis von Moment des jeweiligen Zylinders zum Moment eines Bezugszylinders bestimmt werden.

2. Verfahren nach Anspruch 1, dadurch gekennzeichnet,
   daß man bei der Analyse der Drehzahl

   a) das Gesamt-Drehzahlsignal der Kolbenbrennkraftmaschine über die Dauer mindestens eines Arbeitszykluses der Kolbenbrennkraftmaschine aufspaltet in zylinderindividuelle Drehzahlbeiträge, womit indirekt eine isolierte Betrachtung der Zünddruck-Drehzahl jedes einzelnen Zylinders erreicht wird,
   b) dann die Zünddruck-Drehzahl

   $$(n_{KS_{ZBZ}})$$

   eines beliebig gewählten Bezugszylinders (BZ) einzeln mit der Zünddruck-Drehzahl

   $$(n_{KS_{ZZyl}})$$

   jedes anderen Zylinders vergleicht und dabei jeweils den Unterschied beider Zünddruck-Drehzahlen

   $$(n_{KS_{ZBZ}}, n_{KS_{ZZyl}})$$

   zueinander bestimmt.

3. Verfahren nach Anspruch 2, dadurch gekennzeichnet,
   daß man im Verfahrensschritt a) zunächst

   c) den Drehzahlverlauf ($n_{KS}^{0}$) der komplett betriebenen Kolbenbrennkraftmaschine ermittelt, wobei die Kolbenbrennkraftmaschine auf einen Arbeitspunkt (0) ausgeregelt wird,
   d) dann einen Zylinder (Zyl) mindestens für ein Arbeitsspiel abschaltet und während dessen erneut den Drehzahlverlauf ($n_{KS}^{Zyl}$) ermittelt, wobei alle anderen Zylinder mit derselben Füllung wie im Arbeitspunkt (0) betrieben werden,
   e) diesen Meßvorgang d) für alle Zylinder der Kolbenbrennkraftmaschine wiederholt,
   f) schließlich die Zünddruck-Drehzahlen

   $$(n_{KS_{ZZyl}})$$

   der Einzelzylinder als Differenz der zuvor in den Schritten c), d) und e) ermittelten Drehzahlverläufe ($n_{KS}^{Zyl}, n_{KS}^{0}$) nach der Gleichung

   $$n_{KS_{ZZyl}} = n_{KS}^{0} - n_{KS}^{Zyl}$$

   bestimmt.

4. Verfahren nach Anspruch 2, dadurch gekennzeichnet,

g) daß man in den Verfahrensschritten c), d) und e) den Einspritzbeginn und den Kompressionsdruckverlauf in allen jeweils betriebenen Zylindern bezüglich des Zünd-OT gleich ausregelt.

5. Verfahren nach Anspruch 2 und 3, <u>dadurch gekennzeichnet</u>,

h) daß man in dem Verfahrensschritt b) zunächst die nach Verfahrensschritt f) bestimmten Zünddruck-Drehzahlen ($n_{ZZyl}$) jedes Zylinders (Zyl) mittelwertfrei über den Kurbelwinkel ($\varphi$) relativ zum Zünd-OT des Zylinders (Zyl) beginnend mit "null" in einen Vektor ($x_{Zyl}$) umschreibt, und die Zünddruck-Drehzahl des Bezugszylinders (BZ) mittelwertfrei über den Kurbelwinkel ($\varphi$) relativ zum Zünd-OT des Bezugszylinders (BZ) beginnend mit "null" in einen Vektor ($x_{BZ}$) umschreibt,
i) dann die Unterschiede der Zünddruck-Drehzahlanteile durch Bestimmen des Übertragungsfaktors ($K_{Zyl}$) nach dem Zusammenhang

$$x_{Zyl} = K_{Zyl} * x_{BZ}$$

ermittelt.

6. Verfahren nach Anspruch 5, <u>dadurch gekennzeichnet</u>,

j) daß man im Verfahrensschritt i) den Übertragungsfaktor ($K_{Zyl}$) durch Minimierung des Quadrats des Fehlers (Least-Square-Verfahren) nach der Gleichung

$$K_{Zyl}^{\bullet} = \frac{\phi_{x_{BZ}x_{Zyl}}(0)}{\phi_{x_{BZ}x_{BZ}}(0)} = \frac{\displaystyle\sum_{i=0}^{N-1} x_{Zyl}(i) * x_{BZ}(i)}{\displaystyle\sum_{i=0}^{N-1} x_{BZ}^2(i)}$$

berechnet, wobei N die Anzahl der Daten ist, für die die Schätzung durchgeführt wird.

7. Anwendung des Verfahrens nach einem oder mehreren der voranstehenden Ansprüche, <u>dadurch gekennzeichnet</u>, daß der bestimmte relative Unterschied der Momente der Einzelzylinder ($K_{Zyl}$) als eine zusätzliche Eingangsgröße der Brennstoffregeleinrichtung zugeführt wird und ausgehend davon bzw. von den Füllungsunterschieden der einzelnen Zylinder bezogen auf die Füllung des gewählten Referenzzylinders (BZ) zum Ausgleich der Brennstoffeinspritzmengen in die Zylinder verwendet wird.

## Fig. 1

$nKS^0$

$nKS$

$0$

$700°$

$\varphi$

Fig. 2